# FASCICULE DE BREVET EUROPEEN

(11) **EP 3 017 237 B1**
(45) Date de publication et mention de la délivrance du brevet: **24.07.2019**
(21) Numéro de dépôt: 14738875.5
(22) Date de dépôt: 28.05.2014
(51) Int. Cl.: F17C 5/00, F17C 5/06

(54) **STATION ET PROCÉDÉ DE REMPLISSAGE DE RÉSERVOIRS DE GAZ**
STATION UND VERFAHREN ZUR BEFÜLLUNG VON GASTANKS
STATION AND METHOD FOR FILLING GAS TANKS

(30) Priorité: 05.07.2013 FR 1356620
(43) Date de publication de la demande: 11.05.2016
(73) Titulaire: L'Air Liquide Société Anonyme pour l'Etude et l'Exploitation des Procédés Georges Claude, 75007 Paris (FR)
(72) Inventeur: ALLIDIERES, Laurent, F-38410 Saint Martin d'Uriage (FR)
(74) Mandataire: De Cuenca, Emmanuel Jaime
(86) Numéro de dépôt international: PCT/FR2014/051276
(87) Numéro de publication internationale: WO 2015/001209

(56) Documents cités:
- WO-A1-2012/147340
- FR-A1- 2 919 375
- FR-A1- 2 928 716
- FR-A1- 2 973 858

## Description

La présente invention concerne un procédé et une station de remplissage de réservoirs de gaz.

L'invention concerne plus particulièrement un procédé de remplissage d'un réservoir avec de l'hydrogène sous pression via une station de remplissage comprenant au moins un contenant tampon et un circuit fluidique relié audit au moins un contenant tampon, le circuit de la station de remplissage comprenant une première extrémité reliée à au moins une source d'hydrogène gazeux pour assurer le remplissage du au moins un contenant tampon par du gaz provenant de la source, le circuit comprenant une seconde extrémité munie d'une conduite de transfert destinée à être reliée de façon amovible au réservoir à remplir, pour remplir ce dernier avec de l'hydrogène provenant du au moins un contenant tampon le procédé comportant une étape de purification de l'hydrogène fourni par la source dans un organe de purification avant son transfert dans le au moins un contenant tampon, le circuit de la station de remplissage comprenant en outre au moins un organe de compression pour comprimer du gaz sous pression afin de remplir le au moins un contenant tampon.

Le document FR 2928716A1 décrit un procédé ou une station selon le préambule de la revendication 1 ou 9.

Le remplissage rapide (typiquement en moins de 15 minutes) de réservoirs de gaz carburant (hydrogène notamment) à haute pression (300 à 800 bar par exemple) est réalisé généralement par des équilibrages successifs entre des contenants tampons à haute pression (par exemple 200, 300, 450 ou 850 bar) et le réservoir à remplir. Ce remplissage peut le cas échéant être complété ou suppléé par un ou plusieurs compresseurs.

Pour limiter l'augmentation de température dans les réservoirs du fait du caractère adiabatique de la compression, le gaz carburant est refroidi, par exemple à une température de l'ordre de -40°C avant son entrée dans le réservoir. Ce refroidissement est généralement réalisé via un échangeur de chaleur alimenté par un fluide frigorifique ou cryogénique. Ces méthodes sont décrites abondamment dans la littérature.

On pourra par exemple se référer aux documents FR2919375A1, FR2973858A1, FR2919375A1 décrivant des stations de remplissage auxquelles la présente invention peut s'appliquer.

Les piles à combustible notamment du type « PEMFC » installées à bord des véhicules qui utilisent cet hydrogène carburant nécessitent d'être alimentées avec un hydrogène très pur. Une littérature abondante a décrit les impacts des impuretés (telles que l'eau, le CO, l'H2S) dans l'hydrogène sur les performances et la durée de vie des piles à combustible. Des normes strictes ont ainsi été développées pour s'assurer que l'hydrogène livré dans les réservoirs n'endommage pas les piles (cf. par exemple la norme ISO14687-2).

Les procédés de fabrication industriels connus et relativement peu couteux ne permettent pas d'assurer un tel niveau de pureté en continu.

Pour garantir un niveau de pureté de l'hydrogène il peut être nécessaire de rajouter en amont des stations de remplissage des étapes de purification extrêmement couteuses, telles que des purifications sur lit d'adsorbant fonctionnant à température cryogéniques ou des membranes de palladium.

Une autre solution consiste à approvisionner la station de remplissage avec de l'hydrogène liquide donc très pur ou via des électrolyseurs. Ces solutions sont cependant coûteuses.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'il comporte une étape de transfert de calories entre d'une part le gaz comprimé à la sortie de l'organe de compression et d'autre part l'organe de purification.

Ceci permet d'utiliser une source d'hydrogène à priori non compatible avec les spécifications des piles à combustibles dans une station de remplissage en utilisant un système de purification de technologie standard ou non qui est pleinement intégré à la station.

L'utilisation des calories produites dans la station de remplissage lors de la compression de l'hydrogène dans le fonctionnement de l'organe de purification permet une économie et un fonctionnement particulièrement efficace de la station.

Par ailleurs, des modes de réalisation de l'invention peuvent comporter l'une ou plusieurs des caractéristiques suivantes :
- l'organe de purification fonctionne selon un cycle comprenant une phase de purification du gaz et une phase de régénération, l'étape de transfert de calories entre le gaz comprimé à la sortie de l'organe de compression et l'organe de purification étant réalisée pendant la phase de régénération de l'organe de purification,
- l'étape de purification utilise au moins un dispositif de séparation par adsorption par variation de pression et de température (TPSA),
- le transfert sélectif de calories du gaz comprimé à la sortie de l'organe de compression vers l'organe de purification utilise un échangeur de chaleur en échange thermique avec le gaz en sortie de l'organe de compression et une conduite de fluide caloporteur reliant sélectivement ledit échangeur de chaleur à l'organe de purification et/ou du gaz entrant dans l'organe de purification,
- l'organe de purification comprend un dispositif de séparation par adsorption par variation de pression (PSA, TPSA), comprenant plusieurs lits d'adsorbant de type à charbon actif ou tamis moléculaire_fonctionnant cycliquement et de façon alternée,
- le circuit comprend une conduite de transfert munie d'une vanne et reliant deux lits d'adsorbant pour balayer un premier lit d'adsorbant avec du gaz issu d'un second lit d'adsorbant et inversement, pour permettre une étape d'élution du ou des lits d'adsorbant en phase de régénération, le transfert de calories entre d'une part le gaz comprimé à la sortie de l'organe de compression et d'autre part l'organe de purification comprenant un échange thermique entre, d'une part, le gaz à la sortie de l'organe et, d'autre part le gaz issu du second lit d'adsorbant et destiné à balayer le premier lit,
- le procédé comporte une étape de transfert de calories entre d'une part un organe de réchauffage additionnel et l'organe de purification et/ou le gaz entrant dans ce dernier,
- le procédé comporte une étape de transfert de calories entre l'organe de réchauffage additionnel et le gaz issu du second lit d'adsorbant et destiné à balayer le premier lit,

L'invention concerne également une station de remplissage pour réservoir d'hydrogène gazeux sous pression comprenant au moins un contenant tampon prévu pour contenir de l'hydrogène gazeux sous pression, un circuit fluidique comprenant une pluralité de vannes, le circuit étant relié audit au moins un contenant tampon et comprenant une première extrémité destinée à être raccordée à au moins une source de d'hydrogène gazeux pour permettre le remplissage du au moins un contenant tampon avec du gaz fourni par la au moins une source, le circuit comprenant une seconde extrémité comprenant une conduite de remplissage destinée à être reliée de façon amovible à un réservoir, pour remplir ledit réservoir à partir du au moins un contenant tampon, le circuit de la station de remplissage comprenant au moins un organe de compression tel compresseur pour comprimer de l'hydrogène afin de remplir le au moins un contenant tampon, l'organe de purification comprenant un ou plusieurs lits d'adsorbant de type à adsorption par variation de pression fonctionnant selon un cycle comprenant une phase de purification du gaz et une phase de régénération, la station comprenant un circuit de transfert sélectif de calories de gaz comprimé à la sortie de l'organe de compression vers l'organe de purification.

Selon d'autres particularités possibles :
- le circuit de transfert sélectif de calories de gaz comprimé à la sortie de l'organe de compression vers l'organe de purification comprend un échangeur de chaleur disposé à la sortie de l'organe de compression en échange thermique d'une part avec l'hydrogène comprimé et, d'autre part, avec l'organe de purification et/ou du gaz entrant dans ce dernier,
- l'organe de purification comprend un dispositif de séparation par adsorption par variation de pression (PSA), comprenant plusieurs lits d'adsorbant de type à charbon actif ou tamis moléculaire fonctionnant cycliquement et de façon alternée, le circuit comprenant une conduite de transfert reliant les lits entre eux et munie d'une vanne, pour permettre le balayage d'un premier lit d'adsorbant avec du gaz issu d'un second lit d'adsorbant et inversement, de façon à réaliser une étape d'élution du ou des lits d'adsorbant en phase de régénération et en ce que le circuit de transfert sélectif de calories du gaz comprimé à la sortie de l'organe de compression vers l'organe de purification comprend un échange thermique entre la conduite de transfert et ledit échangeur de chaleur disposé à la sortie de l'organe de compression.

L'invention peut concerner également tout dispositif ou procédé alternatif comprenant toute combinaison des caractéristiques ci-dessus ou ci-dessous, dans le cadre des revendications.

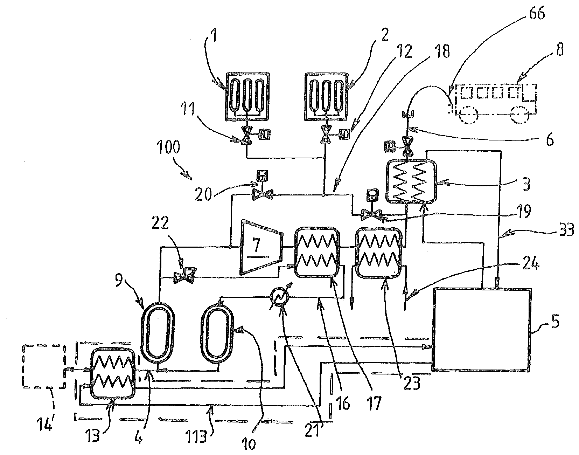

D'autres particularités et avantages apparaîtront à la lecture de la description ci-après, faite en référence à la figure unique qui représente une vue schématique et partielle illustrant la structure et le fonctionnement d'une station de remplissage selon un exemple possible de réalisation de l'invention.

La station 100 de remplissage représentée à titre d'exemple non limitatif est une station prévue pour assurer le remplissage de réservoirs 8 d'hydrogène gazeux à haute pression (par exemple à une pression comprise entre 300 et 850 bar).

Classiquement, la station 100 de remplissage comprend plusieurs contenant 1, 2 tampon (deux dans cet exemple non limitatif mais il peut y en avoir un, trois ou plus de trois).

Chaque contenant 1, 2 tampon est un réservoir ou ensemble de réservoirs prévu(s) pour contenir de l'hydrogène gazeux sous pression à une pression déterminée, par exemple respectivement 450 bar et 850 bar. La station 100 comprend un circuit 11, 12, 18, 4, 6 fluidique comportant une pluralité de conduites et de vannes. Le circuit est relié aux contenants 1, 2 tampon. Le circuit comprend une première extrémité 4 destinée à être raccordée à au moins une source de 14 d'hydrogène gazeux pour permettre le remplissage des contenants 1, 2 tampon avec du gaz provenant de la source 14.

La source 14 d'hydrogène peut comprendre classiquement au moins l'un parmi : un réseau de gaz d'hydrogène à une pression comprise entre 1.3 bar abs (bar absolu) et 200 bar abs, un organe de production d'hydrogène tel qu'un électrolyseur, un reformeur de gaz naturel (« SMR »), un dispositif de craquage de méthanol, un dispositif de reformage autotherme (« ATR »), un dispositif d'oxydation partiel (« POX »)...

Le circuit comprend une seconde extrémité munie d'au moins une conduite 6 de remplissage destinée à être reliée de façon amovible (via un raccord 66 approprié) à un réservoir 8 à remplir.

Plus précisément, les contenants tampon 1, 2, sont reliés en parallèle, via des vannes 11, 12 respectives, à la conduite 6 de remplissage.

De même, une, deux ou plus de deux sources 14 de gaz peuvent être reliées en parallèle via des vannes respectives à la conduite de remplissage 6 (au niveau de la première extrémité).

La conduite 6 de remplissage peut comporter, en amont du raccord 66, un compresseur 7. Plusieurs compresseurs en parallèle ou en série peuvent bien entendu envisagés également.

Le compresseur 7 peut être muni d'une vanne amont et d'une vanne aval (non représentées par soucis de simplification).

Comme représenté, une conduite 18 de dérivation du compresseur 7 peut être prévue. La conduite 18 de dérivation peut comporter deux vannes 20 et 19 et peut être la conduite collectrice qui raccorde les contenants 1, 2 tampon à la conduite 6 de remplissage.

Cette conduite 18 de dérivation permet également le remplissage des contenants 1, 2 tampon via le compresseur 7.

La station 100 comprend également, au niveau de la première extrémité 4, un organe 9, 10 de purification de l'hydrogène fourni par la source, de préférence en amont du compresseur 7. L'organe de purification comprend de préférence un dispositif connu de séparation par adsorption par variation de pression et de température (TPSA), comprenant un et de préférence plusieurs lits d'adsorbant. Par exemple, été comme représenté, l'organe 9, 10 de purification comprend deux lits d'adsorbant (zéolites ou autres) disposés en parallèle dans le circuit. Le gaz fourni par la source 14 est admis alternativement dans l'un puis dans l'autre des adsorbants 9, 10 par un système de vannes, les adsorbants 9, 10 fonctionnent en alternance (régénération de l'un à haute température et basse pression pendant l'adsorption de l'autre à basse température et haute pression). Par exemple il peut s'agir d'un TSA à lit coaxial utilisant des tamis moléculaires ou charbons actifs. Pour des questions de simplification de la figure, toutes les vannes nécessaires à la baisse en pression ou la montée en température des réservoirs 9 et 10 ainsi que le passage en mode production d'un adsorbeur à l'autre ne sont pas représentées (système connu en soi).

A cet effet, et comme représenté à la figure, le circuit peut comprendre de façon connue en tant que telle, une conduite 16 de transfert reliant un premier lit d'adsorbant 9 à un second lit 10 d'adsorbant (et vice versa une autre conduite de transfert non représentée sur la figure par soucis de simplification peut relier les deux adsorbants 9, 10 pour permettre le processus inverse). Cette conduite 16 de transfert est munie d'une vanne 22 permettant de contrôler la pression et le débit de régénération du réservoir 10. La conduite 16 de transfert est prévue pour permettre le balayage d'un adsorbeur 9 avec du gaz (hydrogène) issu de l'autre adsorbeur 10 (et inversement), pour assurer une étape d'élution de l'adsorbeur 10 en phase de régénération.

Selon une particularité avantageuse, la station comprend un circuit 16, 17 de transfert sélectif de calories de gaz du comprimé dans le compresseur 7 vers l'organe 9, 10 de purification.

L'organe 9, 10 de purification peut notamment nécessiter le cas échéant un réchauffement temporaire, par exemple des adsorbants du type TSA peuvent nécessiter un réchauffement lors de la phase de régénération (température comprise par exemple entre 200 et 300°C).

Comme illustré à la figure, ce circuit 16, 17 de transfert sélectif de calories peut comprendre un échangeur 17 de chaleur disposé à la sortie du compresseur 7 en échange thermique d'une part avec l'hydrogène et d'autre part avec la ou les conduites 16 de transfert. C'est-à-dire que le gaz de balayage issu d'un premier lit 9 d'adsorbant est mis en échange thermique avec le gaz comprimé avant de balayer le second 10 lit d'adsorbant. De cette façon, le gaz de balayage utilisé lors de la régénération d'un adsorbant 9, 10 est réchauffé pour améliorer l'efficacité de la régénération de l'adsorbant.

Ceci permet de réchauffer l'adsorbant 9, 10 lors de sa phase de régénération tout en refroidissant le gaz en sortie de compresseur 7. Si besoin, en plus de l'échangeur 17 de chaleur, le circuit peut comporter un échangeur 23 de refroidissement supplémentaire du gaz comprimé. Par exemple cet échangeur 23 est alimenté en fluide réfrigérant, par exemple via un circuit 24 d'eau.

Bien entendu en variante ou en combinaison des calories du gaz comprimé peuvent être transférées directement à l'adsorbant 9, 10 en phase de régénération (via un fluide caloporteur distinct par exemple).

Bien entendu, un réchauffeur 21 est de préférence installé pour suppléer le réchauffage lors de la régénération (l'hydrogène est par exemple réchauffé à la sortie du compresseur 7 à une température de 100°C environ alors qu'une température supérieure est généralement nécessaire pour la régénération, par exemple 200°C) Ce réchauffeur 21 additionnel peut également être disposé dans la conduite 6 de transfert, en série avec l'échangeur 17 de chaleur décrit ci-dessus.

La récupération et l'utilisation de calories produites lors de la compression tel que décrit ci-dessus permet de diminuer la puissance de réchauffage du réchauffeur 21 additionnel.

Comme illustré à la figure, la station 100 peut comprendre en outre, au niveau de la conduite 6 de transfert, un système de refroidissement sélectif (c'est-à-dire un refroidissement contrôlé) du gaz fourni au réservoir 8 (par exemple l'hydrogène est refroidi à une température basse comprise entre -196°C et -40°C). Comme représenté à la figure, ce refroidissement peut être réalisé classiquement via un premier échangeur 3 de refroidissement en échange thermique avec le gaz du circuit et une boucle 33 de circulation de fluide caloporteur entre une source 5 froide et le premier 3 échangeur de chaleur. Classiquement, cette boucle 33 de circulation peut comprendre des vannes et/ou pompes qui ne sont pas représentées par soucis de simplification.

La source 5 froide peut comprendre au moins l'un parmi : une réserve de gaz liquéfie tel que de l'azote, de l'éthylène glycol en solution aqueuse à différentes concentration massiques, de l'ammoniaque, du propane, ou un fluide frigorifique classique.

Comme illustré dans une zone délimitée par des pointillés, la station 100 peut comprendre en outre facultativement un transfert sélectif de frigories (sélectif c'est-à-dire qui de préférence peut être contrôlé en intensité selon les besoins de réfrigération) entre la source froide 5 et gaz avant ou au cours de l'étape de purification. A cet effet, la station 100 peut comprendre un second échangeur 13 de refroidissement en échange thermique avec le gaz à l'entrée de l'organe 9, 10 de purification et une boucle 113 de circulation de fluide caloporteur entre la source 5 froide et le second échangeur 3 de chaleur.

Ce refroidissement du gaz et/ou de l'organe 9, 10 de purification peut être particulièrement avantageux pour l'efficacité de ce dernier, notamment pour les dispositifs de purification par adsorption modulée en température (TSA) lors de la phase de purification (lors passage du gaz dans l'adsorbant et adsorption des impuretés).

La source 5 froide peut ainsi être mutualisée au sein de la station 100 pour améliorer l'efficacité et le coût de l'ensemble.

Cette architecture assure un fonctionnement efficace économique de la station 100.

Le fonctionnement de la station 100 de remplissage peut comporter deux phases distinctes.

Dans une première phase de fonctionnement, le ou les contenants 1, 2 tampon peuvent être remplis. L'hydrogène gazeux fourni par la source 14 est purifié dans l'organe 9, 10 de purification puis comprimé et injecté dans les contenants 1, 2 tampons. Le remplissage commute d'un contenant 1, 2 à l'autre peut être fait lorsque la pression le contenant 1, 2 rempli atteint sa pression nominale (typiquement entre 450 et 850 bar). Un remplissage d'un contenant 1, 2 tampon peut commencer par exemple lorsque la pression en son sein passe sous un seuil (par exemple respectivement 350 et 700 bar. Les étapes ne se suivent pas forcement. Lors de cette première phase, la source 5 froide fournit de la puissance froide au second 13 échangeur de chaleur.

Dans une deuxième phase de fonctionnement un ou des réservoirs 8 sont remplis par la station 100. Par exemple un réservoir 8 est rempli jusqu'à une pression de 700bar. Le réservoir 9 est mis en équilibre successivement avec les contenants 1, 2 tampon. La commutation d'un contenant 1, 2 tampon à l'autre peut être réalisée lorsque la différence de pression le contenant 1, 2 tampon et le réservoir 8 de destination est inférieure à un seuil prédéfini. En fonction de la pression initiale dans le réservoir 8, des étapes d'équilibrage de pression peuvent être omise. De façon connue, si besoin, le compresseur 7 peut compléter ou suppléer ce remplissage. Durant cette seconde phase la source 5 froide fournit de la puissance froide au premier échangeur 3 de chaleur.

En variante, un échangeur de chaleur (non représenté) peut être prévu optionnellement à l'entrée du compresseur 7 pour le cas échéant réchauffer le gaz si le compresseur ne tolère pas du gaz froid.

L'invention permet de diminuer le coût, l'encombrement et la consommation énergétique de la station de remplissage.

## Revendications

1. Procédé de remplissage d'un réservoir (8) avec de l'hydrogène sous pression via une station (100) de remplissage comprenant au moins un contenant tampon (1, 2) et un circuit (11, 12, 4, 6) fluidique relié audit au moins un contenant (1, 2) tampon, le circuit (11, 12, 4, 6) de la station (100) de remplissage comprenant une première extrémité (4) reliée à au moins une source (14) d'hydrogène gazeux pour assurer le remplissage du au moins un contenant (1, 2) tampon par du gaz provenant de la source (14), le circuit (11, 12, 4, 6) comprenant une seconde extrémité munie d'une conduite (6) de transfert destinée à être reliée de façon amovible au réservoir (8) à remplir, pour remplir ce dernier avec de l'hydrogène provenant du au moins un contenant tampon (1, 2), le procédé comportant une étape de purification de l'hydrogène fourni par la source (14) dans un organe (9, 10) de purification, le circuit (11, 12, 4, 6) de la station (100) de remplissage comprenant en outre au moins un organe (7) de compression pour comprimer du gaz sous pression afin de remplir le au moins un contenant (1, 2) tampon, le procédé étant **caractérisé en ce qu'**il comporte une étape de purification de l'hydrogène fourni par la source (14) dans un organe de purification avant son transfert dans le au moins un contenant tampon (1,2) et une étape de transfert (16) de calories entre d'une part le gaz comprimé à la sortie de l'organe (7) de compression et d'autre part l'organe (9, 10) de purification.

2. Procédé selon la revendication 1, **caractérisé en ce que** l'organe (9, 10) de purification fonctionne selon un cycle comprenant une phase de purification du gaz et une phase de régénération et **en ce que** l'étape de transfert (16) de calories entre le gaz comprimé à la sortie de l'organe (7) de compression et l'organe (9, 10) de purification est réalisée pendant la phase de régénération de l'organe (9, 10) de purification.

3. Procédé selon la revendication 1 ou 2, **caractérisé en ce que** l'étape de purification utilise au moins un dispositif de séparation par adsorption par variation de pression et de température (TPSA).

4. Procédé selon l'une quelconque des revendications 1 à 3, **caractérisé en ce que** le transfert sélectif de calories du gaz comprimé à la sortie de l'organe (7) de compression vers l'organe (9, 10) de purification utilise un échangeur (17) de chaleur en échange thermique avec le gaz en sortie de l'organe (7) de compression et une conduite (16) de fluide caloporteur reliant sélectivement ledit échangeur (17) de chaleur à l'organe (9, 10) de purification et/ou du gaz entrant dans l'organe (9, 10) de purification.

5. Procédé selon l'une quelconque des revendications 1 à 4, **caractérisé en ce que** l'organe (9, 10) de purification comprend un dispositif de séparation par adsorption par variation de pression (PSA), comprenant plusieurs lits d'adsorbant de type à charbon actif ou tamis moléculaire fonctionnant cycliquement et de façon alternée.

6. Procédé selon la revendication 5, **caractérisé en ce que** le circuit comprend deux lits d'adsorbant disposés en parallèle, le circuit comprenant une première (16) et une seconde conduites de transfert munies chacune d'une vanne (22) et reliant deux lits d'adsorbant pour balayer un premier lit (9) d'adsorbant avec du gaz issu d'un second lit d'adsorbant (10) et inversement, pour permettre une étape d'élution du ou des lits d'adsorbant en phase de régénération et **en ce que** le transfert (16) de calories entre d'une part le gaz comprimé à la sortie de l'organe (7) de compression et d'autre part l'organe (9, 10) de purification comprend un échange thermique entre, d'une part, le gaz à la sortie de l'organe (7) de compression et, d'autre part le gaz issu d'un lit d'adsorbant (10, 9) et destiné à balayer l'autre lit (9, 10).

7. Procédé selon l'une quelconque des revendications 1 à 6, **caractérisé en ce qu'**il comporte une étape de transfert (21) de calories entre d'une part un organe (21) de réchauffage additionnel et l'organe (9, 10) de purification et/ou le gaz entrant dans ce dernier.

8. Procédé selon les revendications 6 et 7, **caractérisé en ce qu'**il comporte une étape de transfert (21) de calories entre l'organe (21) de réchauffage additionnel et le gaz issu du second lit d'adsorbant (10) et destiné à balayer le premier lit (9).

9. Station de remplissage pour réservoir d'hydrogène gazeux sous pression comprenant au moins un contenant (1, 2) tampon prévu pour contenir de l'hydrogène gazeux sous pression, un circuit (11, 12, 18, 4, 6) fluidique comprenant une pluralité de vannes, le circuit (11, 12, 18, 4, 6) étant relié audit au moins un contenant (1, 2) tampon et comprenant une première extrémité destinée à être raccordée à au moins une source de (14) d'hydrogène gazeux pour permettre le remplissage du au moins un contenant (1, 2) tampon avec du gaz fourni par la au moins une source (14), le circuit (11, 12, 18, 4, 6) comprenant une seconde extrémité comprenant une conduite (6) de remplissage destinée à être reliée de façon amovible à un réservoir (8), pour remplir ledit réservoir (8) à partir du au moins un contenant tampon (1, 2), le circuit (11, 12, 4, 6) de la station (100) de remplissage comprenant au moins un organe (7) de compression tel compresseur pour comprimer de l'hydrogène afin de remplir le au moins un contenant (1, 2) tamponet un organe (9, 10) de purification de l'hydrogène **caractérisé en ce que** l'organe (9,10) de purification comprend un ou plusieurs lits d'adsorbant de type à adsorption par variation de pression (PSA) fonctionnant selon un cycle comprenant une phase de purification du gaz et une phase de régénération pour purifier l'hydrogène fourni avant son transfert dans ledit au moins contenant, et **en ce que** la station comprend un circuit (16, 17) de transfert sélectif de calories de gaz comprimé à la sortie de l'organe (7) de compression vers l'organe (9, 10) de purification.

10. Station selon la revendication 9, **caractérisé en ce que** le circuit (16, 17) de transfert sélectif de calories de gaz comprimé à la sortie de l'organe (7) de compression vers l'organe (9, 10) de purification comprend un échangeur (17) de chaleur disposé à la sortie de l'organe (7) de compression en échange thermique d'une part avec l'hydrogène comprimé et, d'autre part, avec l'organe (9, 10) de purification et/ou du gaz entrant dans ce dernier.

11. Station selon la revendication 10, **caractérisé en ce que** l'organe de purification comprend un dispositif de séparation par adsorption par variation de pression (PSA), comprenant plusieurs lits (9, 10) d'adsorbant de type à charbon actif ou tamis moléculaire fonctionnant cycliquement et de façon alternée, et **en ce que** le circuit comprend une conduite (16) de transfert reliant les lits (9, 10) entre eux et munie d'une vanne (22), pour permettre le balayage d'un premier lit (9) d'adsorbant avec du gaz issu d'un second lit d'adsorbant (10) et inversement, de façon à réaliser une étape d'élution du ou des lits d'adsorbant en phase de régénération et **en ce que** le circuit (16, 17) de transfert sélectif de calories du gaz comprimé à la sortie de l'organe (7) de compression vers l'organe (9, 10) de purification comprend un échange thermique entre la conduite (16) de transfert et ledit échangeur (17) de chaleur disposé à la sortie de l'organe (7) de compression.

12. Station selon l'une quelconque des revendications 9 à 11 **caractérisée en ce que** l'organe de purification (9,10) est situé en amont de l'organe (7) de compression.

## Patentansprüche

1. Verfahren zur Befüllung eines Tanks (8) mit Wasserstoff unter Druck über eine Befüllstation (100), umfassend mindestens einen Pufferbehälter (1, 2) und einen Fluidkreislauf (11, 12, 4, 6), der mit dem mindestens einen Pufferbehälter (1, 2) verbunden ist, wobei der Kreislauf (11, 12, 4, 6) der Befüllstation (100) ein erstes Ende (4) umfasst, das mit mindestens einer Quelle (14) von gasförmigem Wasserstoff verbunden ist, um die Befüllung des mindestens einen Pufferbehälters (1, 2) durch Gas, das aus der Quelle (14) stammt, sicherzustellen, wobei der Kreislauf (11, 12, 4, 6) ein zweite Ende umfasst, das mit einer Übertragungsleitung (6) ausgestattet ist, die dazu bestimmt ist, um auf abnehmbare Weise mit dem zu befüllenden Tank (8) verbunden zu sein, um diesen Letzteren mit Wasserstoff zu befüllen, der aus dem mindestens einen Pufferbehälter (1, 2) stammt, wobei das Verfahren einen Schritt des Reinigens des Wasserstoffs, der von der Quelle (14) geliefert wird, in einem Reinigungsorgan (9, 10) beinhaltet, wobei der Kreislauf (11, 12, 4, 6) der Befüllstation (100) weiter mindestens ein Verdichtungsorgan (7) umfasst, um das Gas unter Druck zu verdichten, um mindestens einen Pufferbehälter (1, 2) zu befüllen, wobei das Verfahren **dadurch gekennzeichnet ist, dass** es einen Schritt des Reinigens des Wasserstoffs, der von der Quelle (14) geliefert wird, in einem Reinigungsorgan, vor seiner Übertragung in den mindestens einen Pufferbehälter (1, 2), und einen Schritt des Übertragens (16) von Kalorien zwischen einerseits dem verdichteten Gas am Ausgang des Verdichtungsorgans (7) und andererseits dem Reinigungsorgan (9, 10) beinhaltet.

2. Verfahren nach Anspruch 1, **dadurch gekennzeichnet, dass** das Reinigungsorgan (9, 10) gemäß einem Zyklus funktioniert, der eine Phase des Reinigens des Gases und eine Phase des Regenerierens umfasst, und dadurch, dass der Schritt des Übertragens (16) von Kalorien zwischen dem verdichteten Gas am Ausgang des Verdichtungsorgans (7) und dem Reinigungsorgan (9, 10) während der Phase des Regenerierens des Reinigungsorgans (9, 10) durchgeführt wird.

3. Verfahren nach Anspruch 1 oder 2, **dadurch gekennzeichnet, dass** der Schritt des Reinigens mindestens eine Vorrichtung zum Abscheiden durch Adsorption durch Veränderung von Druck und Temperatur (TPSA) verwendet.

4. Verfahren nach einem der Ansprüche 1 bis 3, **dadurch gekennzeichnet, dass** die selektive Übertragung von Kalorien des verdichteten Gases am Ausgang des Verdichtungsorgans (7) hin zum Reinigungsorgan (9, 10) einen Wärmeaustauscher (17) im Wärmeaustausch mit dem Gas am Ausgang des Verdichtungsorgans (7) und eine Wärmeträgerfluidleitung (16) verwendet, die selektiv den Wärmeaustauscher (17) mit dem Reinigungsorgan (9, 10) und/oder dem Gas, das in das Reinigungsorgan (9, 10) eintritt, verbindet.

5. Verfahren nach einem der Ansprüche 1 bis 4, **dadurch gekennzeichnet, dass** das Reinigungsorgan (9, 10) eine Vorrichtung zum Abscheiden durch Adsorption durch Veränderung des Drucks (PSA) umfasst, umfassend mehrere Adsorberbetten vom Typ mit Aktivkohle oder Molekularsieb, die zyklisch und auf alternierende Weise funktionieren.

6. Verfahren nach Anspruch 5, **dadurch gekennzeichnet, dass** der Kreislauf zwei Adsorberbetten umfasst, die parallel angeordnet sind, wobei der Kreislauf eine erste (16) und eine zweite Übertragungsleitung umfasst, die jeweils mit einem Ventil (22) ausgestattet sind und zwei Adsorberbetten verbinden, um ein erstes Adsorberbett (9) mit einem Gas zu spülen, das aus einem zweiten Adsorberbett (10) stammt, und umgekehrt, um einen Schritt des Eluierens des Adsorberbetts oder der Adsorberbetten in der Phase des Regenerierens zu ermöglichen, und dadurch, dass die Übertragung (16) von Kalorien zwischen einerseits dem verdichteten Gas am Ausgang des Verdichtungsorgans (7) und andererseits dem Reinigungsorgan (9, 10) einen Wärmeaustausch zwischen einerseits dem Gas am Ausgang des Verdichtungsorgans (7) und andererseits dem Gas umfasst, das aus einem Adsorberbett (10, 9) stammt und dazu bestimmt ist, um das andere Bett (9, 10) zu spülen.

7. Verfahren nach einem der Ansprüche 1 bis 6, **dadurch gekennzeichnet, dass** es einen Schritt des Übertragens (21) von Kalorien zwischen einerseits einem zusätzlichen Erhitzungsorgan (21) und dem Reinigungsorgan (9, 10) und/oder dem Gas, das in dieses Letztere eintritt, beinhaltet.

8. Verfahren nach den Ansprüchen 6 und 7, **dadurch gekennzeichnet, dass** es einen Schritt des Übertragens (21) von Kalorien zwischen dem zusätzlichen Erhitzungsorgan (21) und dem Gas, das aus dem zweiten Adsorberbett (10) stammt, und ausgelegt ist, um das erste Bett (9) zu spülen, umfasst.

9. Befüllungsstation für einen Tank mit gasförmigem Wasserstoff unter Druck, umfassend mindestens einen Pufferbehälter (1, 2), der vorgesehen ist, um gasförmigen Wasserstoff unter Druck zu enthalten, einen Fluidkreislauf (11, 12, 18, 4, 6), der eine Vielzahl von Ventilen umfasst, wobei der Kreislauf (11, 12, 18, 4, 6) mit dem mindestens einen Pufferbehälter (1, 2) verbunden ist und ein erstes Ende umfasst, das dazu bestimmt ist, um an mindestens eine Quelle (14) von gasförmigem Wasserstoff angeschlossen zu werden, um die Befüllung des mindestens einen Pufferbehälters (1, 2) mit Gas zu ermöglichen, das von der mindestens einen Quelle (14) geliefert wird, wobei der Kreislauf (11, 12, 18, 4, 6) ein zweites Ende umfasst, umfassend eine Befüllleitung (6), die dazu bestimmt ist, um auf abnehmbare Weise mit einem Tank (8) verbunden zu sein, um den Tank (8) ausgehend von mindestens einem Pufferbehälter (1, 2) zu befüllen, wobei der Kreislauf (11, 12, 4, 6) der Befüllstation (100) mindestens ein Verdichtungsorgan (7) wie z. B. einen Kompressor umfasst, um Wasserstoff zu verdichten, um mindestens einen Pufferbehälter (1, 2) und ein Reinigungsorgan (9, 10) des Wasserstoffs zu befüllen, **dadurch gekennzeichnet, dass** das Reinigungsorgan (9, 10) ein oder mehrere Adsorberbetten vom Typ mit Adsorption durch Veränderung des Drucks (PSA) umfasst, die gemäß einem Zyklus funktionieren, der eine Phase des Reinigens des Gases und eine Phase des Regenerierens umfasst, um den Wasserstoff zu reinigen, der vor seiner Übertragung in den mindestens einen Behälter geliefert wird, und dadurch, dass die Station einen Kreislauf (16, 17) zur selektiven Übertragung von Kalorien von verdichtetem Gas am Ausgang des Verdichtungsorgans (7) hin zum Reinigungsorgan (9, 10) umfasst.

10. Station nach Anspruch 9, **dadurch gekennzeichnet, dass** der Kreislauf (16, 17) der selektiven Übertragung von Kalorien von verdichtetem Gas am Ausgang des Verdichtungsorgans (7) hin zum Reinigungsorgan (9, 10) einen Wärmeaustauscher (17) umfasst, der am Ausgang des Verdichtungsorgans (7) im Wärmeaustausch einerseits mit dem verdichteten Wasserstoff und andererseits mit dem Reinigungsorgan (9, 10) und/oder dem Gas, das in dieses Letztere eintritt, umfasst.

11. Station nach Anspruch 10, **dadurch gekennzeichnet, dass** das Reinigungsorgan eine Vorrichtung zum Abscheiden durch Adsorption durch Veränderung des Drucks (PSA) umfasst, umfassend mehrere Adsorberbetten (9, 10) vom Typ mit Aktivkohle oder Molekularsieb die zyklisch und auf alternierende Weise funktionieren, und dadurch, dass der Kreislauf eine Übertragungsleitung (16) umfasst, die die Betten (9, 10) miteinander verbindet, und ausgestattet mit einem Ventil (22), um das Spülen eines ersten Adsorberbetts (9) mit Gas zu ermöglichen, das aus einem zweiten Adsorberbett (10) stammt und umgekehrt, um einen Schritt des Eluierens des Adsorberbetts oder der Asdorberbetten in der Phase des Regenerierens zu ermöglichen, und dadurch, dass der Kreislauf (16, 17) der selektiven Übertragung von Kalorien vom verdichteten Gas am Ausgang des Verdichtungsorgans (7) hin zum Reinigungsorgan (9, 10) einen Wärmeaustausch zwischen der Übertragungsleitung (16) und dem Wärmeaustauscher (17) umfasst, der am Ausgang des Verdichtungsorgans (7) angeordnet ist.

12. Station nach einem der Ansprüche 9 bis 11, **dadurch gekennzeichnet, dass** sich das Reinigungsorgan (9, 10) stromaufwärtig vom Verdichtungsorgan (7) befindet.

## Claims

1. A method for filling a tank (8) with pressurised hydrogen via a filling station (100) comprising at least one buffer container (1, 2) and a fluid circuit (11, 12, 4, 6) connected to said at least one buffer container (1, 2), the circuit (11, 12, 4, 6) of the filling station (100) comprising a first end (4) connected to at least one source (14) of gaseous hydrogen for performing the filling of the at least one buffer container (1, 2) with gas originating from the source (14), the circuit (11, 12, 4, 6) comprising a second end equipped with a transfer pipe (6) intended to be removably connected to the tank (8) to be filled, in order to fill the latter with hydrogen from the at least one buffer container (1, 2), the method comprising a step of purifying the hydrogen supplied by the source (14) in a purification member (9, 10), the circuit (11, 12, 4, 6) of the filling station (100) further comprising a compression member (7) to compress the pressurised gas in order to fill the at least one buffer container (1, 2), the method being **characterised in that** it comprises a step of purifying the hydrogen supplied by the source (14) in a purification member (before it is transferred to the at least one buffer container (1, 2) and a step of transferring (16) the calories, between, on the one hand, the compressed gas at the outlet of the compression member (7) and, on the other hand, the purification member (9, 10).

2. Method according to claim 1, **characterised in that** the purification member (9, 10) operates according to a cycle comprising a gas purification phase and a regeneration phase and **in that** the step of transferring (16) calories between the compressed gas at the outlet of the compression member (7) and the purification member (9, 10) is carried out during the regeneration phase of the purification member (9, 10).

3. Method according to claim 1 or 2, **characterised in that** the purification step uses at least one temperature and pressure swing adsorption (TPSA) separation device.

4. Method according to any one of claims 1 to 3, **characterised in that** the selective transfer of calories from the compressed gas at the outlet of the compression member (7) to the purification member (9, 10) uses a heat exchanger (17) in thermal exchange with the gas at the outlet of the compression member (7) and a heat transfer fluid pipe (16) selectively connecting said heat exchanger (17) to the purification member (9, 10) and/or gas entering the purification member (9, 10).

5. Method according to any one of claims 1 to 4, **characterised in that** the purification member (9, 10) comprises a pressure swing adsorption (PSA) separation device comprising several beds of adsorbent of activated carbon or molecular sieve type operating cyclically and alternately.

6. Method according to claim 5, **characterised in that** the circuit comprises two beds of adsorbent positioned in parallel, the circuit comprising a first transfer pipe (16) and a second transfer pipe that are each equipped with a valve (22) and that connect two beds of adsorbent in order to purge a first bed of adsorbent (9) with gas from a second bed of adsorbent (10) and vice versa, in order to enable a step of elution of the bed or beds of adsorbent in a regeneration phase and **in that** the transfer (16) of calories between, on the one hand, the compressed gas at the outlet of the compression member (7) and, on the other hand, the purification member (9, 10) comprises a heat exchange between, on the one hand, the gas at the outlet of the compression member (7) and, on the other hand, the gas from one bed of adsorbent (10, 9) that is intended to purge the other bed (9, 10).

7. Method according to any one of the claims 1 to 6, **characterised in that** it comprises a step of transferring (21) calories between, on the one hand, an additional reheating member (21) and the purification member (9, 10) and/or the gas entering the latter.

8. Method according to claims 6 and 7, **characterised in that** it comprises a step of transferring (21) calories between the additional reheating member (21) and the gas from the second bed of adsorbent (10) that is intended to purge the first bed (9).

9. Filling station for a pressurized gaseous hydrogen tank comprising at least one buffer container (1, 2) provided in order to contain pressurized gaseous hydrogen, a fluid circuit (11, 12, 18, 4, 6) comprising a plurality of valves, the circuit (11, 12, 18, 4, 6) being connected to said at least one buffer container (1, 2) and comprising a first end intended to be connected to at least one source (14) of gaseous hydrogen for enabling the filling of the at least one buffer container (1,2) with gas supplied by the at least one source (14), the circuit (11, 12, 18, 4, 6) comprising a second end comprising a filling pipe (6) intended to be removably connected to the pressurized gaseous hydrogen tank (8) in order to fill said tank (8) from the at least one buffer container (1, 2), the circuit (11, 12, 18, 4, 6) of the filling station (100) comprising at least one compression member (7) such as a compressor for compressing hydrogen in order to fill the at least one buffer container (1, 2) and a hydrogen purification member (9, 10) **characterised in that** the purification member (9, 10) comprises one or more beds of adsorbent of pressure swing adsorption (PSA) type operating according to a cycle comprising a gas purification phase and a regeneration phase to purify the supplied hydrogen prior to its transfer to said at least one contained, and **in that** the filling station comprises a circuit (16, 17) for selective transfer of calories from compressed gas at the outlet of the compression member (7) to the purification member (9, 10).

10. Station according to claim 9, **characterised in that** the circuit (16, 17) for selective transfer of calories from compressed gas at the outlet of the compression member (7) to the purification member (9, 10) comprises a heat exchanger (17) arranged at the outlet of the compression member (7) in thermal exchange, on the one hand, with the compressed hydrogen and, on the other hand, with the purification member (9, 10) and/or the gas entering the latter.

11. Station according to claim 10, **characterised in that** the purification member comprises a pressure swing adsorption (PSA) separation device comprising several beds (9, 10) of adsorbent of activated carbon or molecular sieve type operating cyclically and alternately, and **in that** the circuit comprises a transfer pipe (16) connecting the beds (9, 10) to one another and that is equipped with a valve (22) to enable the purging of a first bed (9) of adsorbent with gas from a second bed (10) of adsorbent and vice versa, so as to carry out a step of elution of the bed or beds of adsorbent in a regeneration phase and **in that** the circuit (16, 17) for selective transfer of calories from the compressed gas at the outlet of the compression member (7) to the purification member (9,10) comprises a heat exchange between the transfer pipe (16) and said heat exchanger (17) positioned at the outlet of the compression member (7).

12. Station according to any one of claims 9 to 11, **characterised in that** the purification member (9, 10) is located upstream from the compression member (7).
